# EUROPEAN PATENT APPLICATION

(11) **EP 1 199 627 A2**
(43) Date of publication of application: **24.04.2002**
(21) Application number: 01124251.8
(22) Date of filing: 16.10.2001
(51) Int. Cl.: G06F 3/12

(54) **Printing system**

(30) Priority: 17.10.2000 JP 2000316787
(71) Applicant: Toshiba Tec Kabushiki Kaisha, Tokyo 101-8442 (JP)
(72) Inventor: Iwase, Akinori, Toshiba Tec Kabushiki Kaisha, Kawasaki-shi, Kanagawa-ken 212-8501 (JP); Haraguchi, Tatsuya, Toshiba Tec Kabushiki Kaisha, Kawasaki-shi, Kanagawa-ken 212-8501 (JP); Ogura, Kazuhiro, Toshiba Tec Kabushiki Kaisha, Kawasaki-shi, Kanagawa-ken 212-8501 (JP)
(74) Representative: HOFFMANN - EITLE

(57) **Abstract**

A portable terminal (1) is used to make communication with a GroupWare server (2). A user selects a binder to be printed stored in an Internet binder (3), and instructs printing of this selected binder. Then, the user selects an MFP (4) for printing this instructed binder. In this way, the Internet binder (3) transmits the selected binder document and attachment file or the like to the selected MFP (4), and performs printing.

## Description

The present invention relates to a printing system for performing printing by using a plurality of printing devices connected via a communication line by making communication with a portable terminal such as a mobile phone capable of receiving E-mail.

In recent years, portable terminals such as a mobile phone have become more and more popular. Such a portable terminal comprises a display section composed of a small-sized liquid crystal display device, a mobile phone communication function, an E-mail receiving/transmitting function, and an Internet connection function.

On the other hand, various forms of E-mail are received or transmitted due to the increased use of E-mail. For example, in addition to text documents, as E-mail subject, attachments such as an image, containing a large amount of data, or a document containing a large amount of data are also received/transmitted.

Such an attachment file comprises a very large amount of data, and cannot be displayed on the small display section of a portable terminal. In addition, the smallness of memories of mobile phones, as well as the screens make it impossible to view such attachments.

Thus, after these E-mails have been transmitted to one's personal computer, the data must be printed out by a connected dedicated printer.

However, in this case, these printouts cannot be obtained unless one goes to the dedicated printer connected to one's own personal computer, which is inconvenient. In addition, E-mails transmitted to the portable terminal cannot be printed when they are needed, thus making it impossible to utilize the convenience of the portable terminal.

It is an object of the present invention to provide a printing system capable of printing an E-mail when needed by utilizing the convenience of a portable terminal.

In order to achieve the foregoing object, according to a first aspect of the present invention, there is provided a printing system having a first device for making communication with a portable terminal, a second device for storing a plurality of data items such as documents, and a plurality of printing devices for performing printing connected to each other via a communication line, the printing system comprising:
a first selecting section which, for a portable terminal, makes communication with the first device, thereby selecting data to be printed from a plurality of data items stored in the second device;
an instructing section which instructs printing of data selected at this first selecting section; and
a second selecting section which selects from the plurality of printing devices a printing device for printing data instructed at this instructing section,
wherein the second device comprises:
a transmitting section which transmits data selected at the first selecting section to a printing device selected at the second selecting section; and
a setting section which sets printing of data transmitted at this transmitting section according to an instruction from the instructing section.

According to a second aspect of the present invention, there is provided a printing system having a first device for making communication with a portable terminal, a second device for storing a plurality of data items such as documents, and a plurality of printing devices for performing printing connected to each other via a communication line, the printing system comprising:
a first selecting section which, for a portable terminal, makes communication with the first device, thereby selecting data to be printed from among a plurality of data items stored in the second device;
a specifying section which specifies date and time and the like of data printing selected at this first selecting section; and
a second selecting section which selects a printing device for printing data specified at this specifying section from among the plurality of printing devices,
wherein the second device comprises:
a transmitting section which transmits data selected at the first selecting section to a printing device selected at the second selecting section; and
an executing section which causes the printing device to execute printing of data transmitted at this transmitting device according to the specification of the specifying section.

According to a third aspect of the present invention, there is provided a printing system having a first device for making communication with a portable terminal, a second device for storing a plurality of data items such as documents, and a plurality of printing devices for performing printing connected to each other via a communication line, the printing system comprising:
a first selecting section which, for a portable terminal, makes communication with the first device, thereby selecting data to be printed from among a plurality of data items stored in the second device;
an instructing section which instructs printing of data selected at this first selecting section; and
a second selecting section which selects a printing device for printing data specified at this specifying section from among a plurality of printing devices,
wherein the second device comprises a control section which controls data selected at the first selecting section to be transmitted to and stored in a printing device selected at the second selecting section according to a distribution instruction from the instructing section.

According to a fourth aspect of the present invention, there is provided a printing system having a first device for making communication with a portable terminal, a second device for storing a plurality of data items such as documents, and a plurality of printing devices for performing printing connected to each other via a communication line, the printing device comprising:
a selecting section which selects data to be printed from among a plurality of data items stored in the second device;
a transmission instructing section which instructs data selected at this selecting section to be transmitted from the second device;
a receiving section which receives data transmitted from the second device instructed to be transmitted at this transmission instructing section;
a control section which controls printing of the databased on the setting of this setting section; and
a setting section which sets printing of data received at this receiving section,
wherein the second device comprises a transmitting section for transmitting the data selected at the selecting section to the receiving section of the printing device according to the transmission instruction of the transmission instructing section.

According to a fifth aspect of the present invention, there is provided a printing system having a first device for making communication with a portable terminal, a second device for storing a plurality of data items such as documents, and a plurality of printing devices for performing printing connected to each other via a communication line, the printing device comprising:
a receiving section which receives data transmitted from the second device by an instruction from the portable terminal;
a storage section for data received at this receiving section;
a setting section which sets printing of data stored in this storage section; and
a control section which controls printing of the data stored in the storage section based on the setting of this setting section.

According to a sixth aspect of the present invention, there is provided a printing system having a first device for making communication with a portable terminal, a second device for storing a plurality of data items such as documents, and a plurality of printing devices for performing printing connected to each other via a communication line, the printing device comprising:
a generating section which, when data transmitted from the second device is printed, generates print history information; and
a transmitting section which transmits the print history information generated at this generating section,
wherein the second device comprises:
a receiving section which receives the print history information transmitted from the transmitting section; and
a storage section which stores the print history information received by this receiving section.

According to a seventh aspect of the present invention, there is provided a printing system having a first device for making communication with a portable terminal, a second device for storing a plurality of data items such as documents, and a plurality of printing devices for performing printing connected to each other via a communication line, the printing device comprising:
a transmitting section which, when data transmitted from the second device is printed according to an instruction from the portable terminal, transmits the printing completion information to the second device,
wherein the second device comprises:
a receiving section which receives the printing completion information transmitted from the transmitting section; and
a notifying section which notifies printing completion to the portable terminal via the first device based on the printing completion information received at the receiving section.

According to an eight aspect of the present invention, there is provided a printing method of a printing system having a first device for making communication with a portable terminal, a second device for storing a plurality of data items such as documents, and a plurality of printing devices for performing printing connected to each other via a communication line, the printing method comprising the steps of:
the portable terminal making communication with the first device, thereby selecting data printed from among a plurality of data items stored in the second device;
instructing printing of the selected data;
selecting a printing device for printing the instructed data from among the plurality of printing devices; and
the second device transmitting the selected data to the selected printing device, thereby setting printing of the transmitted data to the printing device according to the instruction.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a view showing a schematic configuration of a network system according to one embodiment of the present invention;
FIG. 2 is a block diagram depicting a schematic configuration of a mobile phone;
FIG. 3 is a block diagram depicting a schematic configuration of a GroupWare server;
FIG. 4 is a block diagram depicting a schematic configuration of an Internet binder;
FIG. 5 is a block diagram depicting a digital composer (MFP) ;
FIG. 6 is a view showing an exemplary configuration of a mail information database;
FIG. 7 is a view showing an exemplary configuration of a database for specifying a storage destination;
FIG. 8 is a view showing an exemplary configuration of a receiving mail database;
FIG. 9 is a view showing an exemplary configuration of a user information database;
FIG. 10 is a view showing an exemplary configuration of a storage destination database;
FIG. 11 is a view showing an exemplary configuration of a storage file information database;
FIG. 12 is a view showing an exemplary configuration of a printer information database;
FIG. 13 is a view showing an exemplary configuration of a print attribute database;
FIG. 14 is a view showing an exemplary configuration of a print information database;
FIG. 15 is a view showing an exemplary configuration of a print parameter database;
FIG. 16 is a view showing an exemplary configuration of a print history database;
FIG. 17 is a flow chart illustrating an operation for instructing printing to an MFP using a mobile phone in a first embodiment;
FIG. 18 is a view showing a display example of binder selection displayed at a display section of a mobile phone;
FIG. 19 is a view showing a display example of binder print setting displayed at the display section of the mobile phone;
FIG. 20 is a view showing a display example of a printout destination displayed at the display section of the mobile phone;
FIG. 21 is a view showing a display example of making a reservation for binder printing displayed at the display section of the mobile phone;
FIG. 22 is a view illustrating data received/ transmitted between an Internet binder and an MFP;
FIG. 23 is a view showing a user ID and password entry screen at the display section of the MFP;
FIG. 24 is a view showing a display example of a list of document information received from the Internet binder;
FIG. 25 is a view showing an example when a download time and a print processing time is displayed on the MFP;
FIG. 26 is a view showing a display example of a print setting screen;
FIG. 27 is a flow chart illustrating an operation after printing has completed; and
FIG. 28 is a view showing a screen example of E-mail transmitted to a mobile phone.

Hereinafter, preferred embodiments of the present invention will be described with reference to the accompanying drawings.

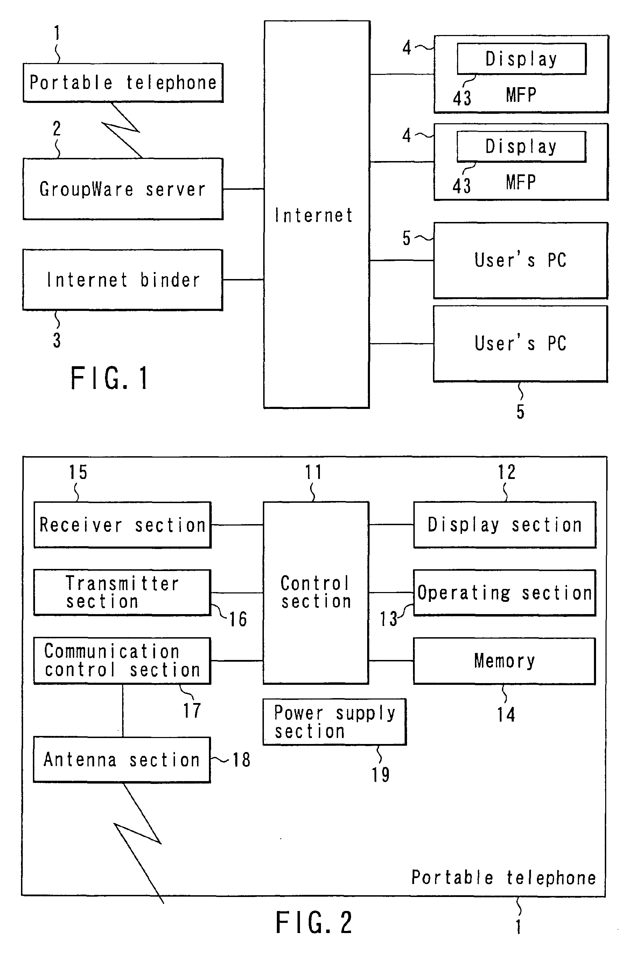

FIG. 1 is a view showing a schematic configuration of a network system according to one embodiment of the present invention. As shown in FIG. 1, this network system comprises a mobile phone (portable terminal) 1, a GroupWare server 2, an Internet binder 3, a plurality of digital composers (MFP) 4, and a plurality of users, PC 5 or the like.

The mobile phone 1 receives/transmits data by connecting it to the GroupWare server 2. In this manner, the mobile phone 1 can receive an E-mail (hereinafter, referred to as mail) from the GroupWare server 2. Although the present embodiment describes that the mobile phone 1 is used as a portable terminal, any portable terminal such as portable mail terminal or PDA (personal digital assistant) can be used similarly used without being limited to this telephone as long as such a terminal is capable of receiving E-mail.

The GroupWare server 2 is a server device composed of a personal computer (PC) or the like in which the GroupWare is installed. This GroupWare server 2 comprises a function for making connection with the mobile phone 1 and a function for making connection with the Internet 6.

The Internet binder 3 is a device composed of a personal computer. This Internet binder 3 receives/ transmits data via the Internet so as to store (memorize) file data or the like.

The MFP 4 is a digital copying machine that comprises a printing device (printer) and an image reader (scanner). The MFP 4 comprises a function for making connection with a public line. This MFP 4 makes connection with the Internet using the function which connects it with the public line, and receives/ transmits data via the Internet. In addition, the MFP 4 comprises a display 43 composed of a liquid crystal display device incorporated in a touch panel.

The users, PC 5 is the user's personal computer that comprises a function for making connection with the Internet.

Now, a configuration of the mobile phone 1 will be described. FIG. 2 is a block diagram depicting a schematic configuration of a mobile phone. As shown in FIG. 2, the mobile phone 1 comprises a control section 11, a display section 12, an operating section 13, a memory 14, a receiver section 15, a transmitter section 16, a communication control section 17, an antenna section 18, and a power supply section 19.

The control section 11 controls the whole mobile phone 1. The display section 12 is composed of a liquid crystal display, and a variety of messages are displayed. The operating section 13 is composed of a variety of keys such as ten numeric keys and a cursor key, and inputs an operating instruction.

The memory 14 is composed of: a storage section for storing preset data such as a control program or user information; and a storage section for temporarily storing a variety of information or control data. The receiver section 15 is a speaker that outputs voice in the case of making communication using a telephone function. The transmitter section 16 is a microphone that inputs voice in the case of making communication using the telephone function.

The communication control section 17 is an interface that controls communication with an external device by using the antenna section 18. The power supply section 19 is composed of a battery or the like so as to supply power to each section of the mobile phone 1.

Now, a configuration of the GroupWare server 2 will be described here.

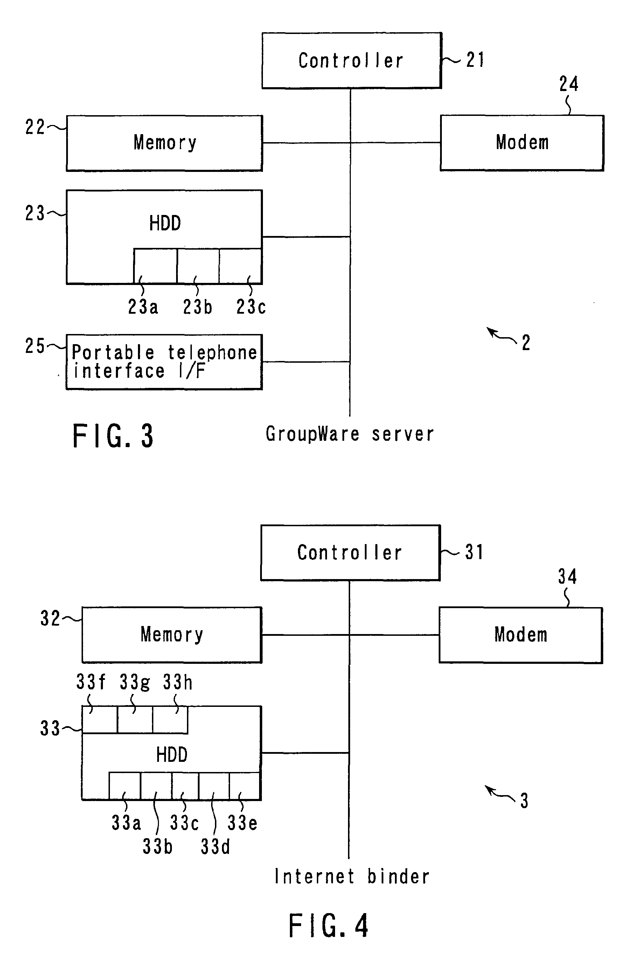

FIG. 3 is a view showing a schematic configuration of the GroupWare server 2. As shown in FIG. 3, the GroupWare server 2 comprises a controller 21, a memory 22, a hard disk drive (HDD) 23, a modem 24, and a mobile phone interface 25 or the like.

A CPU is used as the controller 21. This controller 21 governs the entirety of the GroupWare server 2, and is operated by a program stored in advance. The memory 22 is used to temporarily store a variety of information or control data and the like when the controller 21 operates.

The HDD 23 stores a variety of data, and stores preset information when the GroupWare server 2 operates. In addition, this HDD 23 comprises databases 23a, 23b, and 23c. The modem 24 is an interface for making connection with the Internet. The mobile phone interface 25 is an interface for making connection with a mobile phone.

Now, a configuration of the Internet binder 3 will be described here.

FIG. 4 is a view showing a schematic configuration of the Internet binder 3. As shown in FIG. 4, the Internet binder 3 comprises a controller 31, a memory 32, a had disk drive (HDD) 33, and a modem 34 or the like.

A CPU is used as the controller 31. This controller 101 governs the entire operation of the Internet binder 3, and is operated by a pre-stored program. The memory 32 is used to temporarily store a variety of information or control data when the controller 31 operates. The HDD 33 stores a variety of data such as file data. This HDD 33 comprises a variety of databases 33a, 33b, 33c, 33d, 33e, 33f, 33g, and 33h. The modem 34 is an interface for making connection with the Internet.

Now a schematic configuration of a digital composer 4 will be described here.

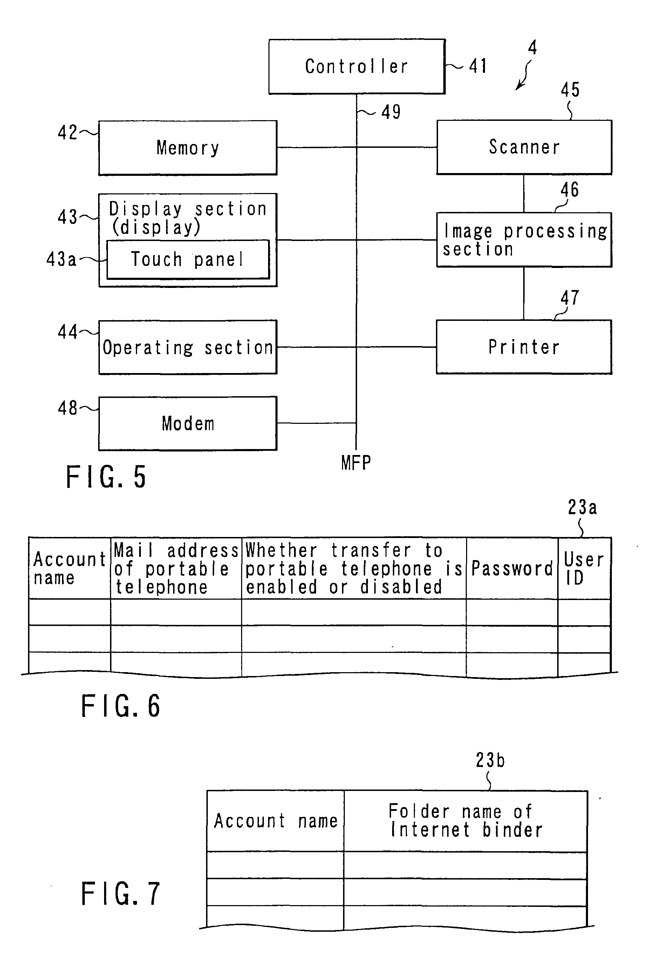

As shown in FIG. 5, the digital composer 4 comprises a controller 41, a memory 42, a display section (display) 43, an operating section 44, a scanner 45, an image processing section 46, a printer 47, and a modem 48 or the like. The above constituent elements are connected to each other via a bus 49 near the controller 41.

A CPU is used as the controller 41. This controller 41 governs the entire operation of the digital composer 4, and is operated by a pre-stored program. The memory 42 is used to temporarily store a variety of information or control data when the controller 41 operates. The display section 43 is a display composed of a liquid crystal display device incorporated in a touch panel 43a. The operating section 44 is composed of hardware keys such as ten numeric keys, a cursor key, and a copy start key. A variety of operations in the digital composer 44 are performed by these hardware keys provided as the operating section 44 and the touch panel 43a.

The scanner 45 optically scans the document, and changes the document to the image data. The image processing section 46 performs a variety of processing functions for image data. The printer 47 prints image data onto paper. Although the printer 47 may be of various types such as a digital photography type or an ink jet type, the present embodiment assumes the use of the digital photography type. The modem 48 is an interface for making connection with the Internet.

Now a database managed by the GroupWare server 2 will be described here.

FIG. 6 is a view showing an exemplary configuration of a mail information database 23a stored in the HDD 23 of the GroupWare server 2.

As shown in FIG. 6, the mail information database 23a is composed of items such as an account name, a mail address of a mobile phone, whether transfer to a mobile phone is enabled or disabled, a password, and a user ID.

A mail address name (account name) such as a user name is recorded in the item of the above account name. A mail address of the user's mobile phone that corresponds to the above account name is recorded in the item of the mail address of the mobile phone.

As to whether transfer to the mobile phone is enabled or disabled, when the GroupWare receives mail to the user that corresponds to the account name, there is recorded information indicating whether or not to transfer mail to the mail address of the mobile phone.

A password assigned to a user is recorded in the password item. A user ID assigned to a user is recorded in the item of the user ID. This user ID may be identical to or different from the account name.

FIG. 7 is a view showing an exemplary configuration of a database 23b for specifying a storage destination stored in the HDD 23 of the GroupWare server 2.

As shown in FIG. 7, the database 23b for specifying a storage destination is composed of items of an account name and an Internet binder folder name.

A mail address name (account name) such as a user name is recorded in the item of the account name. In the item of the Internet binder folder name, a folder name in the HDD 33 of the Internet binder 3 is specified for the account name. This folder name indicates a storage place in the Internet binder 3 such as user mail or WEB that corresponds to the account name.

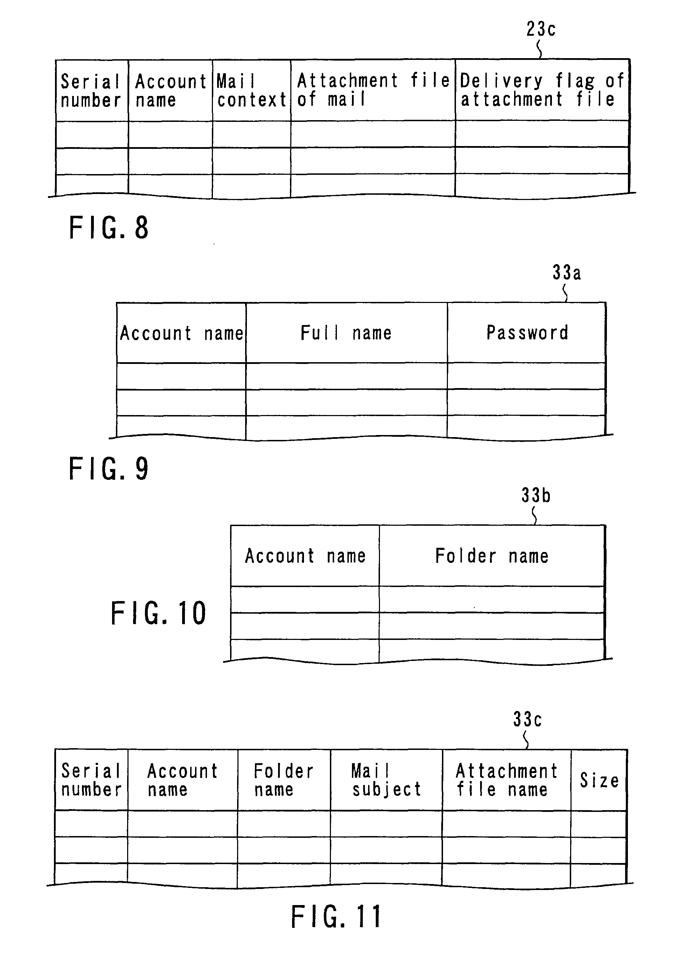

FIG. 8 is a view showing an exemplary configuration of a receiving mail database 23c stored in the HDD 23 of the GroupWare server 2.

As shown in FIG. 8, a receiving mail database 23c composed of items such as a serial number, an account name, a mail subject, an attachment file, and an attachment file delivery flag.

A series of numbers such as serial numbers are recorded in the serial number item. These serial numbers are assigned in order when the corresponding items are recorded. A mail address name (account name) such as a user name is recorded in the account name item.

The subject of the mail to the user of the account name is recorded in the mail subject item. In the attachment file item, in the case where an attachment file is attached to the subject of the mail to the user of an account name, the attachment file name is recorded.

In an item of the attachment file delivery flag, there is recorded a flag indicating whether or not the above attachment file has been delivered to the Internet binder 3. In the case where an attachment file exists in a mail, this delivery flag is set when the attachment file is stored by the Internet binder 3.

Now, a database managed by the Internet binder 3 will be described here.

FIG. 9 is a view showing an exemplary configuration of a user information database 33a stored in the HDD 33 of the Internet binder 3.

As shown in FIG. 9, the user information database 33a is composed of items such as an account name, a full name, and a password.

A mail address name (account name) is recorded in the account name item. A user name (full name) is recorded in the full name item. A password assigned to a user is recorded in the password item.

FIG. 10 is a view showing an exemplary configuration of a storage destination database 33b stored in the HDD 33 of the Internet binder 3.

A mail address name (account name) such as a user name is recorded in the account name item. A folder name in the HDD 33 for recording mail to the user that corresponds to the account name is specified in the folder name item.

FIG. 11 is a view showing an exemplary configuration of a storage file information database 33c stored in the HDD 33 of the Internet binder 3.

As shown in FIG. 11, the storage file information database is composed of items such as a serial number, an account name, a folder name, a mail subject, an attachment file, and size or the like.

A series of numbers provided as serial numbers are recorded in the serial number item. These serial numbers are assigned in order when the corresponding items are recorded. A mail address name (account name) such as a user name is recorded in the account name item.

A folder name in the HDD 33 for recording mail to a user corresponding to the account name is specified in the folder name item. Information indicating the contents of a file such as file type is recorded in the mail subject item.

In the case where an attachment file is attached to the subject of mail to a user of an account name, the attachment file name is recorded in the attachment file item. An attachment file size (data size) is recorded in the size item.

The user information database, storage destination database, and storage file information database are data for the Internet binder 3 to manage attachment files.

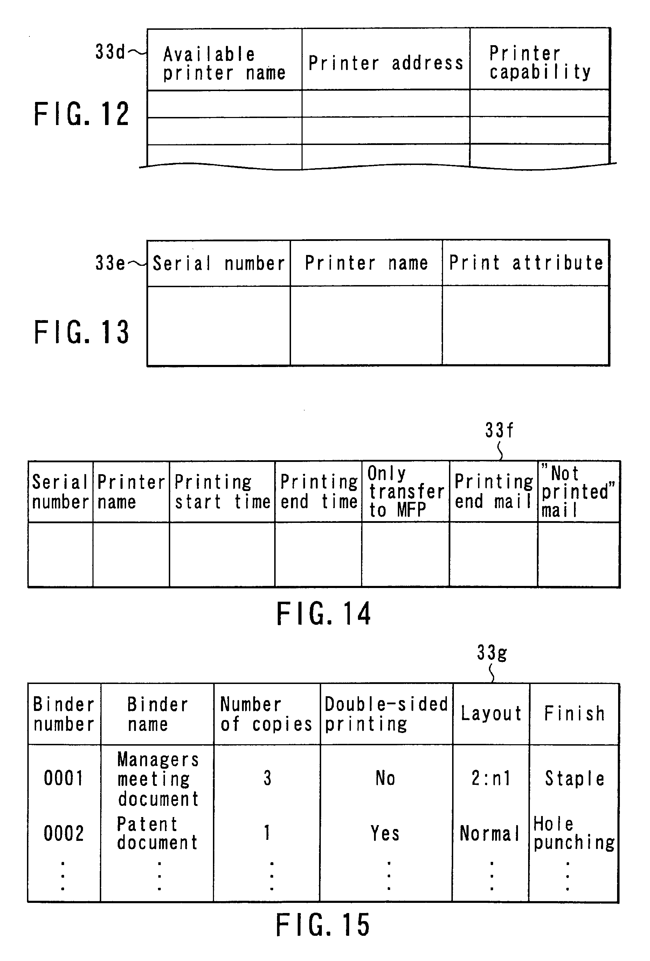

FIG. 12 is a view showing an exemplary configuration of a printer information database 33d stored in the HDD 33 of the Internet binder 3.

As shown in FIG. 12, the printer information database 33d is composed of items such as an available printer name, a printer address, and a printer capability.

An available printer name is recorded in the available printer name item. In the printer address item, an address indicating a place on the printer network is recorded for the available printer name. In the printer capability item, information indicating a printer capability is recorded for the available printer name. For example, information on print resolution, printing speed, and printable form size or the like is recorded as the printer capability.

FIG. 13 is a view showing an exemplary configuration of a print attribute database 33e stored in the HDD 33 of the Internet binder 3.

As shown in FIG. 13, the print attribute database 33e is composed of items such as a serial number, a printer name, a print attribute or the like.

A series of numbers provided as serial numbers are recorded in the serial number item. In the printer name item, a printer name is recorded for the serial numbers. In the print attribute item, a print attribute is recorded for the serial numbers.

FIG. 14 is a view showing an exemplary configuration of a print information database 33f stored in the HDD 33 of the Internet binder 3.

As shown in FIG. 14, the print information database 33f is composed of items such as a serial number, a printer name, a printing start time, a printing end time, a direct feed to MFP 4, a printing end mail, and "Not printed" mail.

A series of numbers provided as serial numbers are recorded in the serial number item. In the printer name item, a printer name is recorded for the serial numbers. In the printing start item, a printing start time is recorded for the serial numbers. Similarly, in the printing end time, a printing end time is recorded for the serial numbers. Then, whether or not transfer to the MFP 4 is enabled or disabled is stored. In addition, in the printing end mail, information for instructing whether or not the end of printing is notified to the mobile phone 1 via mail when printing terminates is recorded for the serial numbers. In the "Not printed" mail item, there is recorded for the serial numbers, information for instructing whether or not a warning mail is transmitted to the mobile phone 1 in the case where print data transmitted to the MFP 4 is not outputted by the MFP 4 even after an elapse of a predetermined time, which will be described later in detail.

FIG. 15 is a view showing an exemplary configuration of a print parameter database 33g stored in the HDD 33 of the Internet binder 3.

As shown in FIG. 15, the print parameter database 33g is composed of items such as a binder number, a binder name, number of copies, a double-sided, a layout, and a finish or the like.

Identification numbers are serially recorded in the binder number item. In the binder name item, a binder name such as managers meeting documents or patent documents are recorded for the binder numbers. In the number of copy item, the number of copies to be printed is recorded for the binder numbers. In the "double-sided" item, information indicating whether or not double-sided copying is enabled is recorded for the binder numbers. In the layout item, information indicating copy layout such as 2 in 1, normal and the like is recorded for the binder number. In the finish item, information indicating finish such as staple, hole punch and the like is recorded for the binder number.

For example, in binder number 0001, a binder name is set to "managers meeting documents", the number of copies is set to "3", double-sided copying is set to "No", and the layout is set to "2 in 1", and the specified finish is set to "staple".

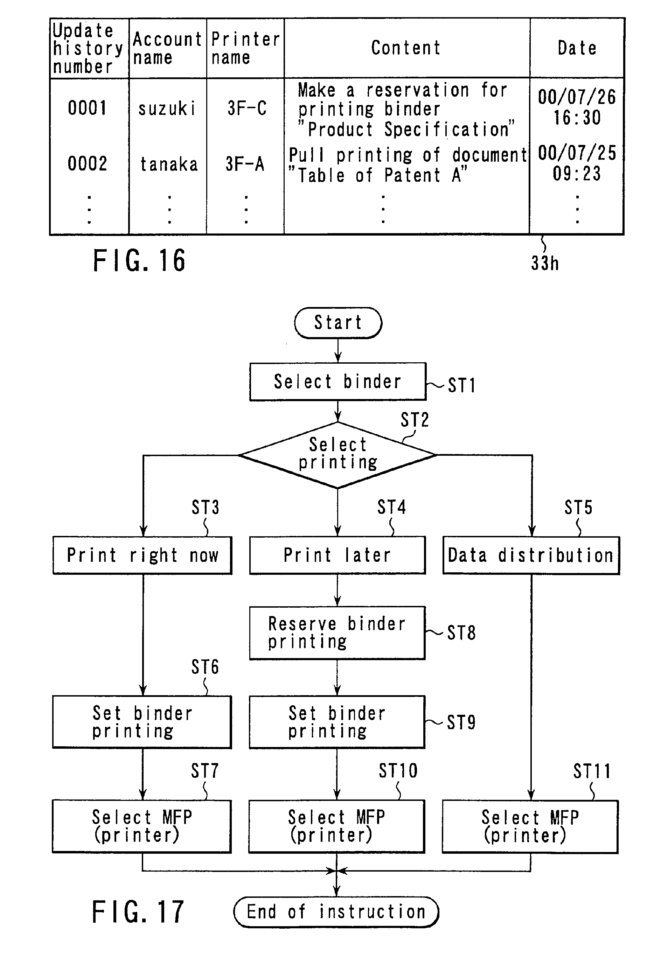

FIG. 16 is a view showing an exemplary configuration of a print history database 33h stored in the HDD 33 of the Internet binder 3.

As shown in FIG. 16, the print history database 33h is composed of items such as an history number, an account name, a printer name, a content, and a date or the like.

In the history number item, identification numbers are serially recorded. In the account name item, a mail address name (account name) such as user name is recorded for the history number. In the date item, the date and time during printout is recorded for the history number.

For example, what is recorded in history number 0001 is that an account name is set to "Suzuki", a printer name is set to "3F-C", the content is set to "make a reservation for printing a binder 'Product Specification' ", and the date is set to "01/07/25, 16:30".

Now, a first embodiment in such a configuration will be described here.

In the first embodiment, an operation for instructing printing for MFP 4 using a mobile phone 1 will be described with reference to the flow chart shown in FIG. 17.

When a connection is established by the mobile phone 1 making a connection request, the GroupWare server 2 transmits binder information, display information displayed at the display section 12 of the mobile phone 1, and information on MFP 4 or the like according to a print request from the mobile phone 1.

First, a binder to be printed from the mobile phone 1 is selected (ST 1). The binder used here denotes a unit of a plurality of documents (documents or files) collectively bound, and printing can be instructed for such each binder. That is, a print instruction is supplied to a binder having a plurality of documents bound thereby, whereby all the documents included in the binder can be printed with a single operation.

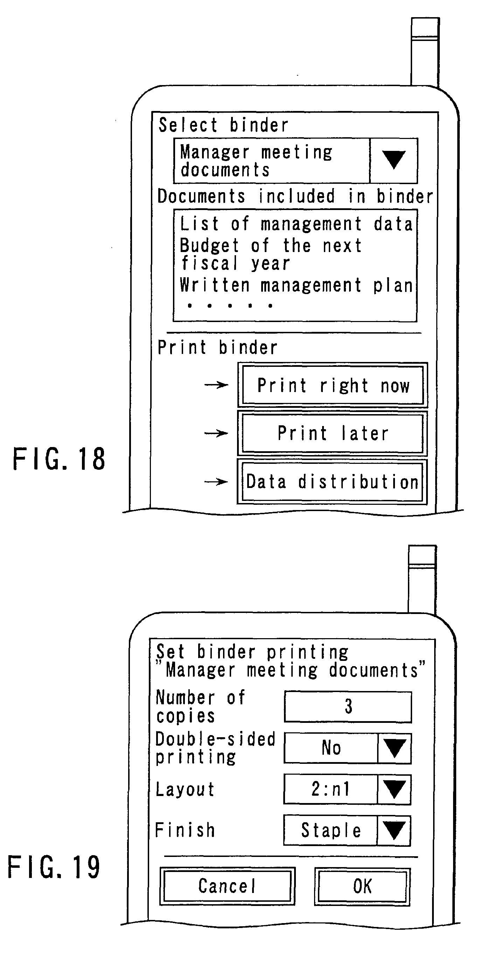

FIG. 18 is a view showing a display example of binder selection displayed at the display section 12 of the mobile phone 1. This binder name can select a list in a top-down manner. For example, when a managers meeting document is selected, a list of documents included in this "managers meeting documents" binder is displayed. In the managers meeting documents, there is displayed a list of documents such as one page of management data listing, five pages of budget of the next fiscal year, and two pages of a written management plan.

Then, a printing method displayed at the display section 12 is selected from the mobile phone 1 (ST 2). As shown in FIG. 18, "print right now", "print later", or "only data distribution" and the like is selected.

When "print right now" is selected (ST 3), the printing of the selected binder is set (ST 6).

FIG. 19 is a view showing a display example of binder print setting displayed at the display section 12 of the mobile phone 1. Here, print parameters such as number of copies, whether double-sided printing is enabled or disabled, layout, finish or the like are set. For example, the number of copies for the selected "managers meeting documents" is set to "3", the double-sided printing is set to "No", the layout is set to "2 in 1", and the finish is set to "staple".

Then, as shown in FIG. 19, either one of the cancel button and OK button displayed at the display section 12 of the mobile phone 1 is selected. In the case where the cancel button has been selected, all the operations from the step ST 1 to this step are cancelled.

When the OK button is selected, MFP 4 provided as a printout destination (printer) is selected (ST 7).

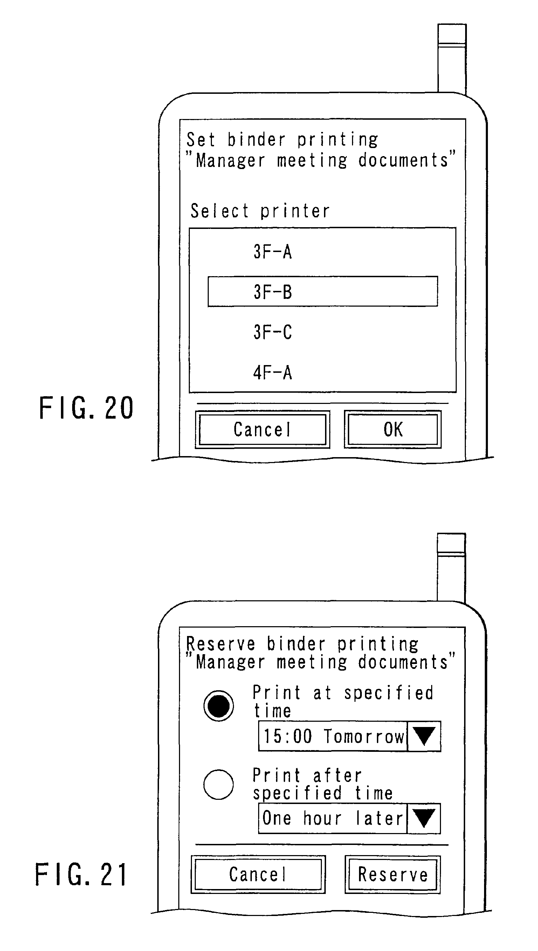

FIG. 20 is a view showing a display example of a printout destination (printer) displayed at the display section 12 of the mobile phone 1. As shown in FIG. 20, the GroupWare server 2 transmits an available printer name to the mobile phone by referring to the printer information database 33d stored in the HDD 22 of the Internet binder 3. the printer names include "3F-A", "3F-B", "3F-C", and "4F-A" or the like, for example. In FIG. 20, a printer name "3F-B" is selected.

Printers that have been used may be displayed to be listed based on print history information. In addition, the lastly used printer may be displayed as a default printer. Alternatively, the most frequently used printer may be displayed as a default printer.

Here, as shown in FIG. 20, either one of the cancel button and print button displayed at the display section 12 of the mobile phone 1 is selected. In the case where the cancel button has been selected, all the operations from the step ST 1 to this step are cancelled.

When the print button is selected, an instruction "print right now" from the mobile phone 1 is terminated.

The above-described instruction is recorded in accordance with serial binder numbers in the print parameter database 33g of the HDD 33 of the Internet binder 3 by way of the GroupWare server 2. As shown in FIG. 15, for example, what is recorded in binder number 0001 is that the binder name is set to "managers meeting documents", the number of copies is "3", double-sided printing is "No", the layout is "2 in 1", and the finish is set to "staple".

The Internet binder 3 distributes the above print parameter data and document (material) information on "managers meeting document" to the selected printer name (for example, 3F-B) via the Internet because "print right now" is instructed at the step ST 2.

The MFP 4 starts printing based on the distributed print parameters and document information on "managers meeting documents". An operation after printing has completed will be described later.

Now, a case in which "print later" has been selected at the step ST 2 will be described here.

When the "print later" is selected at the step ST 2 (ST 4), it goes to setting print reservation (ST 8).

FIG. 21 is a view showing a display example of binder print reservation displayed at the display section 12 of the mobile phone 1. Here, printing at a specified time or printing after a specified time can be selected. These items can be selected by a button. For example, when printing at a specified time is selected, it can be specified to start printing at 15:00 the following day. In addition, when printing after a specified time is selected, it can be specified to start printing one hour later.

Here, as shown in FIG. 21, either one of the cancel button and reservation button displayed at the display section 12 of the mobile phone 1 is selected. In the case where the cancel button has been selected, all the operations from the step ST 1 to this step are cancelled.

When the reservation button is selected, printing of the selected binder is set (ST 9). As shown in FIG. 19, after binder print setting displayed at the display section 12 of the mobile phone 1 has been provided, either one of the cancel button and OK button is selected. In the case where the cancel button has been selected, all the operations from the step ST 1 to this step are cancelled.

When the OK button is selected, MFP 4 provided as a printout destination (printer) is selected (ST 10). As shown in FIG. 20, after the printer name displayed at the display section of the mobile phone 1 has been selected, either one of the cancel button and print button is selected. In the case where the cancel button has been selected, all the operations from the step ST 1 to this step are cancelled.

When the print button is selected, an instruction "print later" from the mobile phone 1 is terminated. As the content of print reservation, a print completion time as well as printing start time may be specified.

The above-described instruction is recorded in accordance with serial binder numbers in the print parameter database 33g of the HDD 33 of the internet binder 3 by way of the GroupWare server 2. As shown in FIG. 15, for example, what is recorded in binder number 0001 is that the binder name is set to "managers meeting documents", the number of copies is set to "3", double-sided printing is set to "No", the layout is set to "2 in 1", and the finish is set to "staple".

In addition, a printer name and a printing start time are recorded in accordance with serial numbers in the print information database 33f of the HDD 33 of the Internet binder 3.

Then, when a printing start time has come, the Internet binder 3 distributes the print parameter data and document (material) information on "managers meeting documents" via the Internet to MFP 4 of the selected printer name (for example, 3F-B). The document information may be distributed in an asynchronous manner or may be distributed in advance according to a set time.

The MFP 4 starts printing based on the distributed print parameters and document information on "managers meeting documents". An operation after printing has completed will be described later.

Now, a case in which "data distribution" has been selected at the step ST 2 will be described here.

When "data distribution" is selected at the step ST 2 (ST 5), it goes to selection of distribution destination (ST 11). As shown in FIG. 20, after the printer name displayed at the display section 12 of the mobile phone 12 has been selected, either one of the cancel button and print button is selected. In the case where the cancel button has been selected, all the operations from the step ST 1 to this step are cancelled.

In the case where the print button is selected, an instruction of "data distribution" from the mobile phone 1 is terminated.

The above-described instruction is recorded in accordance with serial numbers in the print information database 33f of the HDD 33 of the Internet binder 3 by way of the GroupWare server 2 after a flag has been set to the printer name and "only delivery to MFP".

Then, the Internet binder 3 distributes the document (material) information on the "managers meeting documents" to the MFP 4 of the selected printer name (for example, 3F-B) via Internet.

The MFP 4 stores the distributed print parameters and the document information on the "managers meeting documents" in a memory 42. Printing the document information stored in this memory 42 will be described later.

Now, a second embodiment will be described here.

The second embodiment describes a case in which document information such as documents stored in the Internet binder 3 or attachment files is printed by the MFP 4.

The document information stored in the Internet binder 3 can not only be acquired by users PC 5, but also can be directly printed by the MFP 4.

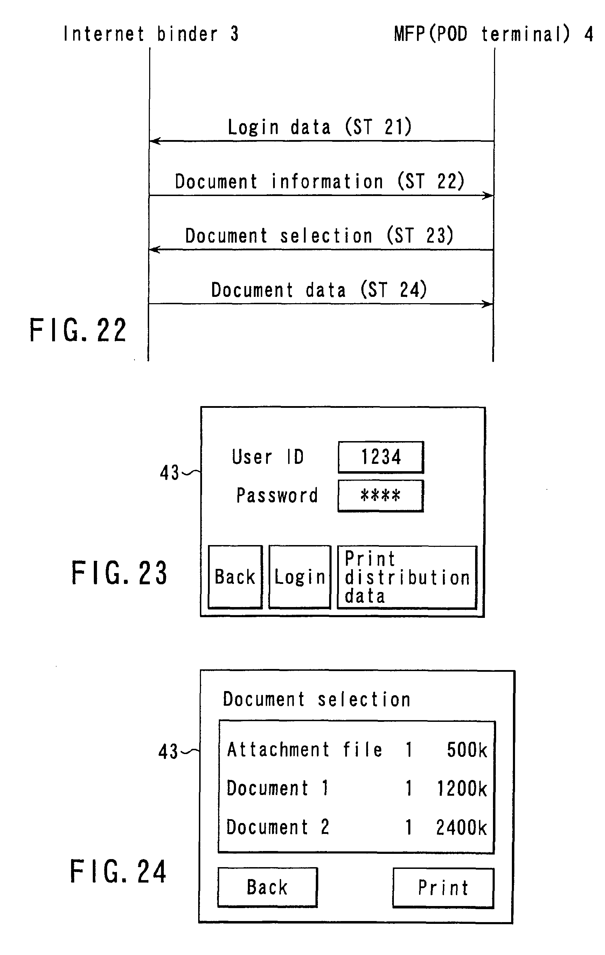

Hereinafter, a print operation of document information will be described in accordance with the operating procedures for MFP 4 with referring to FIG. 22 to FIG. 26.

FIG. 23 to FIG. 26 are views each showing a display example of a display section 43 of the MFP 4 when document information is printed by the MFP 4.

First, in the case where the document information stored in the Internet binder 3 is printed by the MFP 4, a user enters a user ID and password by operating a touch panel 43a and an operating section 44.

FIG. 23 is a view showing a display example of a user ID and password input screen at the display section 43 of the MFP 4. On the input screen shown in FIG. 23, input fields for user ID and password are displayed at the display section 43, and a "back" key and a "login" key are displayed on the touch panel 43a.

While such an input screen is displayed, the user inputs a user ID and password. In the case where the inputted user ID and password are correct, the user touches the "login" key on the touch panel 43a (ST 21).

Then, the MFP 4 transmits the user ID and password, thereby performing processing for connection with the Internet binder 3. In the Internet binder 3, when connection with the MFP 4 is established, a list of document information stored for the user ID transmitted from the MFP 4 is transmitted to the MFP 4 (ST 22).

Upon receipt of this list of document information, the MFP 4 displays a document selection screen at the display section 43 based on the list of document information received from the Internet binder 3.

FIG. 24 is a view showing a display example when a list of document information received from the Internet binder 3 is displayed at the display section 43. In this case, the user touches a document name displayed at the display section 43 on the touch panel, whereby the desired document is selected. The document selection screen as shown in FIG. 24 is displayed at the display section 43.

The user selects a desired document from such a document selection screen by using the touch panel 43a, and touches a "select" key. Then, the MFP 4 requests the Internet binder 3 to transfer the selected document data (ST 23).

The Internet binder 3 transfers to the MFP 4 the document data requested by the MFP 4 (ST 24).

At this time, the Internet binder 3 selects an optimal compression form as document data from the current state of the Internet communication path as follows.

In the case of a low communication capacity
-> high priority is given to the communication speed

In the case of a high communication capacity
-> high priority is given to print quality

In addition, the Internet binder 3 calculates a data download time (transfer time) based on the current state of the Internet communication path and an amount of transfer data, and transmits to the MFP 4 a prediction time required for processing including the print processing time after the completion of transfer. The MFP 4 displays the prediction time required for received processing on the display 43, and further, displays the progress of the processing. The print processing time is calculated from the printer capability recorded in the printer information database 33d of the HDD 33 of the Internet binder 3.

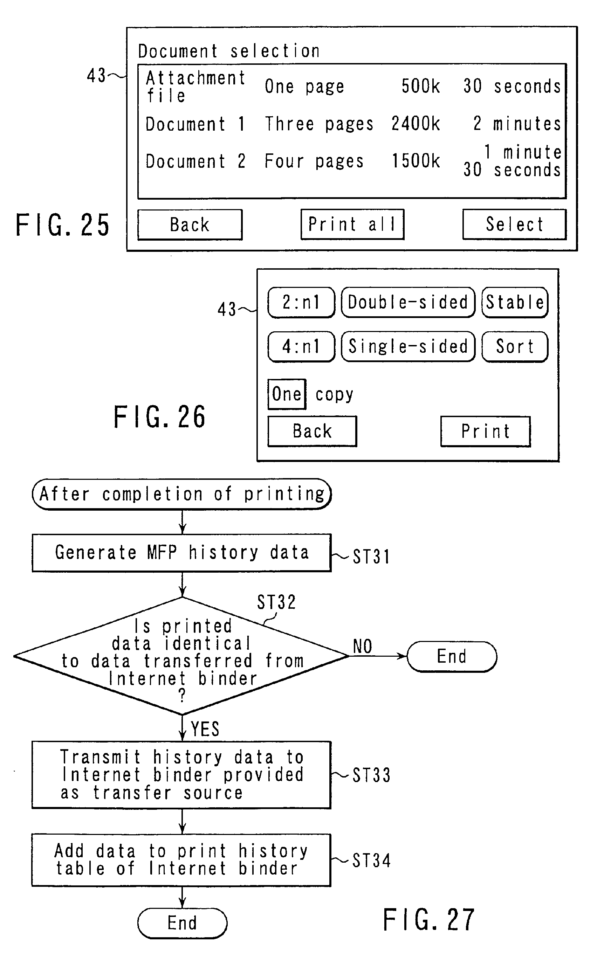

FIG. 25 is a view showing an example of when a download time and a print processing time is displayed on the display 43 of the MFP 4.

The MFP 4 displays a print setting screen on the display portion 43 upon the receipt of data from the Internet binder 3.

FIG. 26 is a view showing a display example of the print setting screen. When the user inputs a variety of settings and selects printing from this print setting screen, the MFP 4 execute printing of document data transferred from the Internet binder 3.

Now, a third embodiment will be described here.

The third embodiment describes a case of printing document information distributed in advance to the MFP 4.

The user who has distributed the document in advance by way of the mobile phone 1 enters a user ID and a password by operating the touch panel 43a and operating section 44 of the MFP 4.

FIG. 23 shows a display example of the user ID and password input screen at the display section 43 of the MFP 4. On the input screen shown in FIG. 23, the user ID and password input fields are displayed at the display section 43, and the "back" key and "login" key are displayed on the touch panel 43a.

While such an input screen is displayed, the user enters the user ID and password. Then, in the case where the input user ID and password are correct, the user touches a "print distribution data" key on the touch panel 43a.

A controller 41 of the MFP 4 displays a document name or file distributed to the display section 43. As shown in FIG. 25, when a [print all] key is touched, it goes to the print setting screen. When the user inputs print settings on the print setting screen shown in FIG. 26, and touches a [Print] key on the touch panel 43a, the MFP 4 executes printing of document information stored in the memory 42.

After the document information has been distributed to the MFP 4, in the case where the MFP 4 does not notify that printing has been completed within a predetermined time, the Internet binder 3 transmits a "Not printed" mail to the mobile phone 1 that has instructed data distribution. In this manner, a state in which documents are left to be stored can be prevented.

However, the "Not printed" mail item of the print information database 33f of the Internet binder 3 is set to "No transmission required", no mail transmission is performed. In addition, a time required for the above notification can be set.

Now, a fourth embodiment will be described here.

In the fourth embodiment, an operation after the completion of printing will be described with reference to the flow chart shown in FIG. 27.

When printing has completed, the MFP 4 generates history data (ST 31), and further, checks whether or not the printed data corresponds to the data transmitted to the Internet binder 3 (ST 32).

In the case where the check result is affirmative, the MFP 4 transmits the generated history data to the Internet binder 3 provided as a transfer destination (ST 33).

The Internet binder 3 adds the received history data to a print history database (table) 33h of the HDD 33. For example, what is recorded in history 1 is that the account name is set to "Suzuki", the printer name is set to "3F-C", the content is set to "make a reservation for printing binder 'Product Specification'", and the date is set to "00/07/16, 16:30".

In addition, the Internet binder 3 transmits a printing end mail to the mobile phone 1 that has instructed printing to notify that print processing has completed at the MFP 4. In this manner, the fact that print processing has completed can be notified to the user.

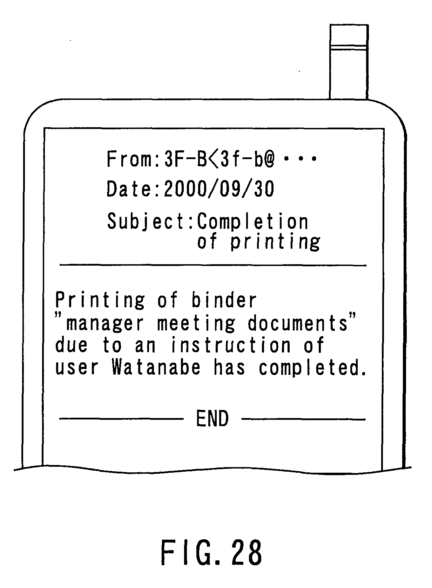

FIG. 28 is a view showing a screen example of a mail transmitted to the mobile phone 1. For example, the printer name is set to "3F-B", the date is set to "2000/09/30", the subject is set to "completion of printing", and the content of notification is displayed as "printing of binder "managers meeting documents" due to an instruction from a user 'Watanabe' has completed".

However, in the case where the printing end mail item of the print information database 33f of the Internet binder 3 is set to "No transmission required", no mail transmission is performed.

As has been described above, according to the above embodiments of the present invention, a mail can be printed from a mobile phone by means of a printer.

In addition, a mail can be printed from the mobile phone by a desired printer at a specified date and time.

In addition, a mail is distributed in advance from the mobile phone to a desired printer so that the printout can be printed immediately from the printer without being peeped by another person.

Further, a desired mail can be transmitted and printed by providing access to the Internet binder 3, which stores mail from the MFP 4.

The print history of instructions, from the mobile telephone, to print the data transmitted from the Internet binder 3 to the MFP 4 can be stored and managed in the Internet binder 3.

When data transmitted from the Internet binder 3 to the MFP 4 has been printed by way of an instruction from the mobile phone, the completion of printing can be notified to the mobile phone via mail.

The present invention is not limited to each of the above embodiments, and various modifications can be made within the spirit of the invention at the stage of carrying out the invention. The embodiments may be carried out in a combination to provide the best use, and in this case, any advantageous effect caused by such a combination is achieved. Further, the above embodiments include inventions at various stages, and various inventions can be extracted according to a proper combination in the disclosed constituent elements. For example, even if some constituent elements are erased from all the constituent elements presented in the embodiments, in the case where the problems described in the Brief Summary of the Invention section can be solved, and advantageous effect described in the Detailed Description of the Invention section is achieved, an arrangement from which the constituent elements have been erased can be extracted as an invention.

## Claims

1. A printing system having a first device (2) for making communication with a portable terminal (1), a second device (3) for storing a plurality of data items such as documents, and a plurality of printing devices (4) for performing printing connected to each other via a communication line, the printing system **characterized by** comprising:
a first selecting section (13) which, for a portable terminal (1), makes communication with the first device (2), thereby selecting data to be printed from a plurality of data items stored in the second device (3);
an instructing section (13) which instructs printing of data selected at this first selecting section (13); and
a second selecting section (13) which selects from the plurality of printing devices (4) a printing device for printing data instructed at this instructing section (13),
wherein the second device (3) comprises:
a transmitting section (31) which transmits data selected at the first selecting section (13) to a printing device (4) selected at the second selecting section (13); and
a setting section (31) which sets printing of data transmitted at this transmitting section (31) according to an instruction from the instructing section (13).

2. A printing system according to claim 1, **characterized in that** the portable terminal (1) is directed to a terminal device capable of receiving an E-mail such as a mobile phone, a portable mail terminal, a PDA (personal digital assistant).

3. A printing system according to claim 1, **characterized in that** the first device (2) and second device (3) are directed to personal computers.

4. A printing system according to claim 1, **characterized in that** the communication line is directed to the Internet.

5. A printing system according to claim 1, **characterized in that** the first selecting section (13), instructing section (13), and second selecting section (13) are directed to an operating section (13) of the portable terminal (1).

6. A printing system having a first device (2) for making communication with a portable terminal (1), a second device (3) for storing a plurality of data items such as documents, and a plurality of printing devices (4) for performing printing connected to each other via a communication line, the printing system **characterized by** comprising:
a first selecting section (13) which, for a portable terminal (1), makes communication with the first device (2), thereby selecting data to be printed from among a plurality of data items stored in the second device (3);
a specifying section (13) which specifies date and time and the like of data printing selected at this first selecting section (13); and
a second selecting section (13) which selects a printing device for printing data specified at this specifying section from among the plurality of printing devices (4),
wherein the second device (3) comprises:
a transmitting section (31) which transmits data selected at the first selecting section (13) to a printing device (4) selected at the second selecting section (13); and
an executing section (31) which causes the printing device (4) to execute printing of data transmitted at this transmitting device (31) according to the specification of the specifying section (13).

7. A printing system according to claim 6,
**characterized in that** the specifying section (13) is directed to an operating section (13) of the portable terminal (1).

8. A printing system having a first device (2) for making communication with a portable terminal (1), a second device (3) for storing a plurality of data items such as documents, and a plurality of printing devices (4) for performing printing connected to each other via a communication line, the printing system **characterized by** comprising:
a first selecting section (13) which, for a portable terminal (1), makes communication with the first device (2), thereby selecting data to be printed from among a plurality of data items stored in the second device (3);
an instructing section (13) which instructs printing of data selected at this first selecting section (13); and
a second selecting section (13) which selects a printing device (4) for printing data specified at this specifying section (13) from among a plurality of printing devices (4),
wherein the second device (3) comprises a control section (31) which controls data selected at the first selecting section (13) to be transmitted to and stored in a printing device (4) selected at the second selecting section (13) according to a distribution instruction from the instructing section (13).

9. A printing system having a first device (2) for making communication with a portable terminal (1), a second device (3) for storing a plurality of data items such as documents, and a plurality of printing devices (4) for performing printing connected to each other via a communication line, the printing device (4) **characterized by** comprising:
a selecting section (43) which selects data to be printed from among a plurality of data items stored in the second device (3);
a transmission instructing section (43) which instructs data selected at this selecting section (43) to be transmitted from the second device (3);
a receiving section (48) which receives data transmitted from the second device (3) instructed to be transmitted at this transmission instructing section (43) ;
a setting section (43) which sets printing of data received at this receiving section (48); and
a control section (41) which controls printing of the databased on the setting of this setting section (43),
wherein said second device (3) comprises a transmitting section (31) for transmitting the data selected at the selecting section (43) to the receiving section (48) of the printing device (4) according to the transmission instruction of the transmission instructing section (43).

10. A printing system having a first device (2) for making communication with a portable terminal (1), a second device (3) for storing a plurality of data items such as documents, and a plurality of printing devices (4) for performing printing connected to each other via a communication line, the printing device (4) **characterized by** comprising:
a receiving section (48) which receives data transmitted from the second device (3) by an instruction from the portable terminal (1);
a storage section (42) for data received at this receiving section (48) ;
a setting section (43) which sets printing of data stored in this storage section (42); and
a control section (41) which controls printing of the data stored in the storage section based on the setting of this setting section (43).

11. A printing system having a first device (2) for making communication with a portable terminal (1), a second device (3) for storing a plurality of data items such as documents, and a plurality of printing devices (4) for performing printing connected to each other via a communication line, the printing device (4) **characterized by** comprising:
a generating section (41) which, when data transmitted from the second device (3) is printed, generates print history information; and
a transmitting section (41) which transmits the print history information generated at this generating section (41),
wherein the second device (3) comprises:
a receiving section (34) which receives the print history information transmitted from the transmitting section (41); and
a storage section (33) which stores the print history information received by this receiving section (34).

12. A printing system according to claim 11, **characterized in that** the storage section (33) is directed to a hard disk device.

13. A printing system having a first device (2) for making communication with a portable terminal (1), a second device (3) for storing a plurality of data items such as documents, and a plurality of printing devices (4) for performing printing connected to each other via a communication line, the printing device (4) **characterized by** comprising:
a transmitting section (41) which, when data transmitted from the second device (3) is printed according to an instruction from the portable terminal (1), transmits the printing completion information to the second device (3),
wherein the second device (3) comprises:
a receiving section (34) which receives the printing completion information transmitted from the transmitting section (41); and
a notifying section (31) which notifies printing completion to the portable terminal via the first device (2) based on the printing completion information received at the receiving section (34).

14. A printing method of a printing system having a first device (2) for making communication with a portable terminal (1), a second device (3) for storing a plurality of data items such as documents, and a plurality of printing devices (4) for performing printing connected to each other via a communication line, the printing method **characterized by** comprising the steps of:
the portable terminal (1) making communication with the first device (2), thereby selecting data printed from among a plurality of data items stored in the second device (3);
instructing printing of the selected data;
selecting a printing device for printing the instructed data from among the plurality of printing devices (4); and
the second device (3) transmitting the selected data to the selected printing device (4), thereby setting printing of the transmitted data to the printing device (4) according to the instruction.
